# EUROPEAN PATENT SPECIFICATION

(11) **EP 3 268 209 B1**
(45) Date of publication and mention of the grant of the patent: **03.04.2019**
(21) Application number: 16720917.0
(22) Date of filing: 08.03.2016
(51) Int. Cl.: B29C 65/48, B29C 65/52

(54) **PROCESS FOR DETECTING AND CONTROLLING THE PRESENCE OF SOLVENT IN THE PROCESS OF GLUING OF SINGLE USE DISPOSABLE UNITS FOR MEDICAL USE WHICH ARE FORMED BY AT LEAST A FIRST COMPONENT AND A SECOND COMPONENT**
METHODE ZUR ERKENNUNG UND KONTROLLE DES VORHANDENSEINS EINES LÖSUNGSMITTELS IN EINEM VERFAHREN ZUR VERKLEBUNG VON EINWEGEINHEITEN ZUR MEDIZINISCHEN VERWENDUNG AUS MINDESTENS EINEM ERSTEN BAUTEIL UND EINEM ZWEITEN BAUTEIL
PROCÉDÉ POUR DÉTECTER ET CONTROLER LA PRÉSENCE DE SOLVANT DANS LE PROCESSUS DE COLLAGE D'UNITÉS JETABLES À USAGE UNIQUE POUR UNE UTILISATION MÉDICALE, QUI SONT FORMÉES PAR AU MOINS UN PREMIER ÉLÉMENT ET UN DEUXIÈME ÉLÉMENT

(30) Priority: 10.03.2015 IT BL20150003
(43) Date of publication of application: 17.01.2018
(73) Proprietor: Bucci Automations SPA, 48018 Faenza (RA) (IT)
(72) Inventor: CARLIN, Alessandro, 32013 Longarone (BL) (IT); FANT, Daniele, 32013 Longarone (BL) (IT)
(74) Representative: Modiano, Micaela Nadia
(86) International application number: PCT/IT2016/000061
(87) International publication number: WO 2016/142959

(56) References cited:
- JP-A- 2002 086 572
- US-A1- 2005 208 271

## Description

The present disclosure relates to a system for detecting and controlling the presence of solvent in the process of gluing single use disposable units for medical use, in particular for the treatment of dialysis. The scope of the invention is defined by the subject-matter of claim 1.

Dialysis is a treatment process personalized and repetitive, almost daily in major cases. This process involves the connection of the patient to dedicated machines for filtering and cleaning the blood. The connection system between the patient and the machine is made of a single use disposable unit able to contain and control the flow of the blood and of the supplementary substances used in the treatment. These disposables units are made of objects in plastic and typically by flow-diverters, male/female connectors, sealing membranes that together are the personalized "kit" for dialysis treatment.

The process to generate and assemble these single use disposable units includes phases of plastics moulding, extrusion and coiling of the tubes, gluing and welding to join the parts.

The union of two or more parts can then be obtained via processes of gluing or welding.

In particular for what concerns the gluing process, this process includes a step of application of solvent on at least one of the elements to be fastened in order to form the single use disposable unit. The quantity and uniformity of application of the solvent determines the quality of this phase of gluing as the combination of the two components to form the disposable unit must be carried out appropriately, in order to avoid that they can generate losses and turbulence in the flow, harmful for the patient and / or the machine.

The product, moreover, after it has been assembled is subjected to the sterilization process, sent and stored in the distribution sites, and then used in clinics as needed. The time window in which the object must be conform is very wide and there are phenomena such as temperature, humidity, conditions of storage and transportation that may over time affect the functionality of the product. Therefore, the gluing process related to the presence, quantity and uniformity of the distribution of the solvent on the surface of the component is an essential aspect for the functionality of the product.

One of the distribution systems of solvent or adhesive in the step of producing the single use disposable units intended for medical use is described in the document DE3820543. The solution described in the patent DE3820543 involves the construction of a device in which the phase of the solvent or adhesive transferring is realized when the tubular element is contained by two retaining elements which, by moving the tubular element in axial and radial directions, allow a uniform distribution of the layer of the solvent or adhesive.

The patent DE3820543 expresses a subsequent step of control exclusively for the detection of possible displacements of the retaining element of the tubular element in order to allow a re-alignment. Therefore it is not provided a system for the detection of the application or the quantity or the presence of solvent/adhesive following the transfer phase of this.

They are also known, according to the state of the art, solutions related to the recognition of the effectiveness of the gluing phase in fields different from the production of single use disposable units for medical use; these solutions are mainly carried out after the step of gluing, and therefore aim to highlight any defects of the gluing thus causing the reject of any products that does not correspond to the parameters specified. JP2002086572 discloses a non-destructive process for presence detection and control system in the gluing process of components which comprises:
- positioning of a first component; - distribution of solvent layer on the component;
- positioning of the first component with solvent layer between a background surface and a device for a non-destructive survey;
- detection and evaluation of parameters indicating the level of distribution on the first component within the limits previously set.

These solutions, used also but not only in the production of single use disposable units for medical use, often involve the interruption of the process of samples-collection and causes the reject of components already assembled with consequent costs in terms of resources.

They are known, according to the state of the art, systems for detecting the distribution of the solvent on the surface by methods called "high test pressure": this type of test can lead to the damage, due to the high pressure applied, of the surface of the component making it no more usable and therefore necessarily a reject. In addition, the automation of this type of testing involves an expenditure in terms of resources such as to impair the economy of the entire process.

The purpose of the invention disclosed in the present patent application is therefore to identify a system of detection of the quantity, distribution and uniformity of the layer of solvent transferred on a component before this component is joined with at least a second component in order to form a disposable unit for medical use, in particular for therapeutic processes of the dialysis type.

Furthermore the purpose of the invention disclosed in the present patent application is therefore to identify a system of detection of the quantity, distribution and uniformity of the layer of solvent transferred on a component before the subsequent step of gluing which is not destructive and which does not requires the interruption of the whole process of making of the single use disposable units.

The technical field of the solution disclosed in the present patent application is to allow in conditions of continuity of the production process a detection that does not require means to come into contact with the surface on which the solvent has been applied as the detection of visual type.

One of the main problems of the visual detection of the presence of a solvent on a surface is related to the transparency of the solvent and of the surface on which it is applied, to the volatility of the solvent and to the impossibility, because of necessity for the product making, to insert appropriate markers such as, for example, UV markers.

It also is known to the state of the art the solution disclosed in the patent EP0279925 which involves the performing of a visual test for checking the level of airtightness of two glued components, based on the fact that one of the surfaces of transparent plastic, that will be associated to a second surface of transparent plastic for the formation of the component and which is fitted with a layer of solvent, is subjected to a lowering of temperature close to freezing.

The absence of solvent at the freezing temperature involves the transparency of the surface or parts of it once it has been associated with the second surface while the condition of the presence of the solvent and the uniformity of distribution at the freezing temperature corresponds to a milky appearance of the disposable component so associated.

The test, as instructed in the mentioned document, could be achieved without the interruption of the process directly by an operator (human intervention) or by the support of technical equipment such as, for example, colorimeters.

This system therefore involves certain disadvantages including: possible rejecting of the component already realized, a constant presence of an operator on machine board for the conduction of the tests, in case they are not used devices of the type colorimeters, need to provide an additional system for the drastic lowering of temperature and for maintaining these conditions for the efficacy of the test, and the risk of compromising the functionality of single use disposable units so assembled due to the invasiveness of the test method.

In particular, the system disclosed allows to detect the presence of the solvent by means of an evaluation of the temperature difference between the temperature of the component surface before it is processed with solvent and the temperature of a sample processed with the solvent, as this temperature difference is determined by the evaporation of the solvent.

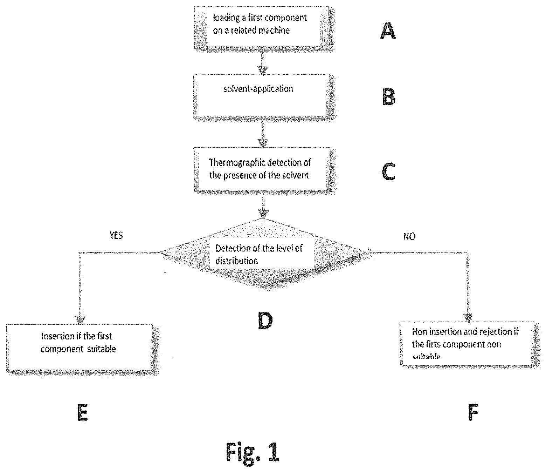

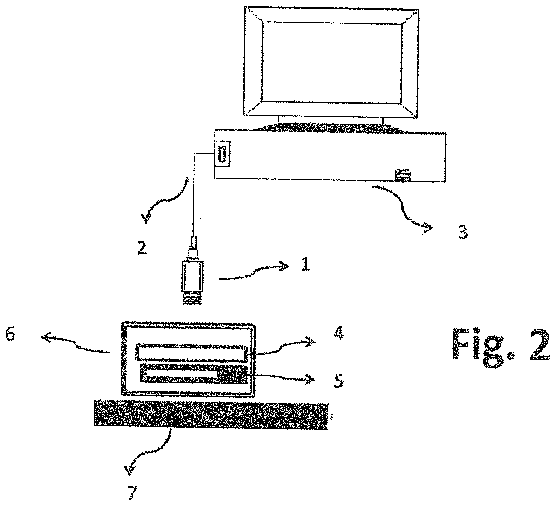

In particular, the temperature difference is detected by thermographic techniques. The system disclosed is depicted by way of example but not exclusive in Fig. 1 and Fig. 2, as attached.
Fig. 1: exemplification of the process of gluing
Fig. 2 : visual detection system
   1 Thermographic Camera
   2 Signal Transmission
   3 Hardware for data display and processing
   4 Component with uniform temperature of the surface
   5 Layer of solvent
   6 System of component with solvent applied
   7 Background with uniform temperature.

As an example but not exclusively here follows the description of the typical gluing process which involves the step of loading a first component on a related machine (A Fig. 1) and the following step of solvent-application, for example by immersion (B OF Fig. 1).

The following step (C of Fig. Fig. 1) provides that the component is subjected to a thermographic detection, preferably by means of a thermographic camera (C of Fig. 1), thus having the detection of the presence of the solvent and the detection of the level of distribution on the first component within the limits previously set (D of Fig. 1).

So the thermographic detection allows to go on with the insertion of the second component in order to form the disposable unit in the case the detection evaluates the first component suitable (E of Fig. 1), or alternatively the non-insertion of the second component and the subsequent rejection of the first component in case the detection and the analysis of the data do not show the first component, that has been processed according to the previous steps(F of Fig. 1), as suitable.

In Fig. 2 there is an example, not exclusive, of the elements comprised in steps C and D of Fig. 1: the surface of the first component with uniform temperature (4) is soaked in solvent (5) to form the unit "first component - solvent"(6); this unit (6) is placed in front of a background that has got a surface with a constant temperature (7).

The thermographic camera (1), placed at an appropriate focal distance, detects the temperature difference between the temperature value of the component at a uniform temperature (4), the value detected before the immersion in the solvent (5), the temperature value of the system "first component-solvent" (6) and the temperature value of the background with the surface at a constant temperature (7). Converting these differences into images which, by means of a generic transmission (2), are transferred to the hardware system (3) and appropriately processed through an appropriate algorithm.

The analysis of the data thus collected is used to start the component 1 to step E of Fig. 1 or to step F of Fig. 1 according to the results, all while maintaining the continuity of the gluing process.

## Claims

1. Non-destructive process for presence detection and control system in the gluing process of single use medical disposables, which comprises
- positioning (A) of a first component (4) with uniform and stable surface temperature;
- distribution (B) of solvent layer on the component (4);
- positioning (C) of the first component (4) with solvent layer between a background surface with a uniform and stable temperature (7) and a device for a non-destructive thermographic survey (1);
- detection and evaluation (D) of parameters indicating the level of distribution on the first component (4) within the limits previously set;
- insertion (E) by gluing of the first component (4) on the second component in order to form the disposable unit in the case the detection (D) evaluates the first component suitable during the thermographic survey or (F) non-insertion on the second component and the subsequent rejection of the first component (4) in case the detection (D) evaluates the first component (4) not suitable .

2. Process according claim 1 **characterized in that** the device (1) is a thermographic camera.

3. Process according previous claims **characterized in that** the insertion by gluing (E) the first component (4) on the second component is determinate by thermal irregularities of the first component (4) surface due to solvent evaporation.

4. Process as previous claims **characterized in that** in distribution phase (B) the solvent could be applied on the first component (4) by immersion.

5. Process as previous claims **characterized in that** positioning (A), distribution (B), positioning (C), detection and evaluation (D), insertion (E) or non-insertion (F) grants a continuous process.

## Patentansprüche

1. Nicht-destruktives Verfahren zur Anwesenheitserfassung und Kontrollsystem im Klebeprozess von medizinischen Einwegprodukten, welches umfasst:
- Positionieren (A)
einer ersten Komponente (4) mit gleichmäßiger und stabiler Oberflächentemperatur;
- Verteilen (B) der Lösungsmittelschicht auf der Komponente (4);
- Positionieren (C) der ersten Komponente (4) mit der Lösungsmittelschicht zwischen einer Hintergrundoberfläche mit einer gleichmäßigen und stabilen Temperatur (7) und einem Instrument für eine nicht-destruktive thermografische Untersuchung (1);
- Detektion und Bewertung (D) der Parameter, die den Grad der Verteilung auf der ersten Komponente (4) innerhalb der voreingestellten Grenzen angeben;
- Aufbringen (E) durch Kleben der ersten Komponente (4) auf die zweite Komponente, um die Einwegeinheit zu bilden, in dem Fall, dass die Detektion (D) die erste Komponente während der thermografischen Untersuchung als geeignet bewertet, oder (F) Nicht-Aufbringung auf die zweite Komponente und anschließende Ausmusterung der ersten Komponente (4) im Falle, dass die Detektion (D) die erste Komponente (4) als nicht geeignet bewertet.

2. Verfahren gemäß Anspruch 1, **dadurch gekennzeichnet, dass** das Instrument (1) eine Thermografiekamera ist.

3. Verfahren gemäß den vorangegangenen Ansprüchen, **dadurch gekennzeichnet, dass** die Aufbringung durch Kleben (E) der ersten Komponente (4) auf die zweite Komponente durch thermische Unregelmäßigkeiten auf der Oberfläche der ersten Komponente (4) bedingt durch Lösungsmittelverdampfung bestimmt wird.

4. Verfahren gemäß den vorangegangenen Ansprüchen, **dadurch gekennzeichnet, dass** die Verteilungsphase (B) des Lösungsmittels auf die erste Komponente (4) durch Eintauchen erfolgen könnte.

5. Verfahren gemäß den vorangegangenen Ansprüchen, **dadurch gekennzeichnet, dass** die Positionierung (A), Verteilung (B), Positionierung (C), Detektion und Bewertung (D), Aufbringung (E) oder Nicht-Aufbringung (F) einen kontinuierlichen Prozess gestattet.

## Revendications

1. Procédé non destructif pour un système de détection de présence et de contrôle dans le procédé de collage de jetables médicaux à usage unique, qui comporte :
- le positionnement (A) d'un premier composant (4) avec une température de surface uniforme et stable,
- la distribution (B) d'une couche de solvant sur le composant (4),
- le positionnement (C) du premier composant (4) avec une couche de solvant entre une surface de fond avec une température uniforme et stable (7) et un dispositif pour un relevé thermographique non destructif (1),
- la détection et l'évaluation (D) de paramètres indiquant le niveau de distribution sur le premier composant (4) dans les limites préalablement établies,
- l'insertion (E) par collage du premier composant (4) sur le second composant afin de former l'unité jetable dans le cas où la détection (D) évalue que le premier composant est adapté pendant le relevé thermographique ou une non-insertion (F) sur le second composant et le rejet subséquent du premier composant (4) dans le cas où la détection (D) évalue que le premier composant (4) n'est pas adapté.

2. Procédé selon la revendication 1, **caractérisé en ce que** le dispositif (1) est une caméra thermographique.

3. Procédé selon les revendications précédentes, **caractérisé en ce que** l'insertion par collage (E) du premier composant (4) sur le second composant est déterminée par des irrégularités thermiques de la surface du premier composant (4) dues à l'évaporation du solvant.

4. Procédé selon les revendications précédentes, **caractérisé en ce que** pendant la phase de distribution (B), le solvant pourrait être appliqué sur le premier composant (4) par immersion.

5. Procédé selon les revendications précédentes, **caractérisé en ce que** le positionnement (A), la distribution (B), le positionnement (C), la détection et l'évaluation (D), l'insertion (E) ou la non-insertion (F) permettent un procédé continu.
